# EUROPÄISCHE PATENTSCHRIFT

(11) **EP 2 730 624 B1**
(45) Veröffentlichungstag und Bekanntmachung des Hinweises auf die Patenterteilung: **01.03.2017**
(21) Anmeldenummer: 13191956.5
(22) Anmeldetag: 07.11.2013
(51) Int. Cl.: C09C 1/48, C01B 33/18, B82Y 30/00

(54) **VERFAHREN ZUR HERSTELLUNG EINES ZUSATZSTOFFS UND VORRICHTUNG ZUR VERARBEITUNG VON GUMMI ODER KUNSTSTOFFEN**
METHOD FOR THE PRODUCTION OF AN ADDITIVE AND DEVICE FOR PROCESSING RUBBER OR SYNTHETIC MATERIALS
PROCÉDÉ DE FABRICATION D'UN ADDITIF ET DISPOSITIF DE TRAITEMENT DE CAOUTCHOUC OU DE MATIÈRES SYNTHÉTIQUES

(30) Priorität: 09.11.2012 DE 102012021896
(43) Veröffentlichungstag der Anmeldung: 14.05.2014
(73) Patentinhaber: PlasmaTreat GmbH, 33803 Steinhagen (DE)
(72) Erfinder: Buske, Christian, 33619 Bielefeld (DE); Grishin, Artur, 33803 Steinhagen (DE); Knospe, Alexander, Dr., 31848 Bad Münder (DE)
(74) Vertreter: Cohausz & Florack

(56) Entgegenhaltungen:
- CN-A- 1 712 352
- GB-A- 1 211 703
- DATABASE WPI Week 200922 Thomson Scientific, London, GB; AN 2009-G07944 XP002719386, & RU 2 349 546 C1 (GOROVOI M A) 20. März 2009 (2009-03-20)

## Beschreibung

Die Erfindung betrifft ein Verfahren zur Herstellung eines Zusatzstoffs, insbesondere für Gummi- oder Kunststoffprodukte, vorzugweise für Kraftfahrzeugreifen. Weiterhin betrifft die Erfindung eine Vorrichtung zur Verarbeitung von Gummi und/oder Kunststoffen.

Bei der Herstellung von Gummi- oder Kunststoffprodukten werden Gummi oder Kunststoffe mit bestimmten Materialeigenschaften benötigt. Diese Materialeigenschaften von Gummi oder Kunststoffen werden im Stand der Technik vielfach durch die Zugabe von Zusatzstoffen in die verwendeten Gummi- oder Kunststoffmischungen erreicht. Beispielsweise werden die Abrieb- und Hafteigenschaften von Kraftfahrzeugreifen durch die Zugabe von partikelförmigen Zusatzstoffen wie Siliziumdioxid- (SiO₂) oder Kohlenstoffpartikeln eingestellt.

Bei den bekannten Herstellungsverfahren erfolgt die Produktion der Zusatzstoffe in großindustriellem Maßstab. Die Zusatzstoffe werden in Gebinde abgefüllt und gelagert und können bei der Herstellung von Gummi- oder Kunststoffprodukten den Gebinden bedarfsmäßig in der erforderlichen Menge entnommen und der Gummi- oder Kunststoffmischung beigegeben werden.

Allerdings haben diese Zusatzstoffe den Nachteil, dass sie über die Zeit aggregieren, d.h. dass die einzelnen Partikel der Zusatzstoffe sich zu größeren Partikeln verbinden. Dies kann dazu führen, dass die Zusatzstoffe dem Gummi oder den Kunststoffen, denen sie zugegeben werden, nicht mehr oder nur noch in geringerem Umfang die gewünschten Eigenschaften verleihen können. Die für einige Gummi- oder Kunststoffprodukte erforderliche Qualität kann mit diesen Zusatzstoffen dann teilweise nicht erreicht werden.

Für bestimmte Anwendungen ist es daher erforderlich, die aggregierten Partikel der Zusatzstoffe durch spezielle Aufbereitungsverfahren wieder zu de-aggregieren, d.h. zu trennen, so dass die Zusatzstoffe wieder die ursprüngliche Größenverteilung erhalten. Diese Aufbereitungsverfahren sind jedoch aufwändig und teuer.

Ein weiterer Nachteil bei der Verwendung der bisher verfügbaren Zusatzstoffe besteht darin, dass sich einige Arten von Zusatzstoffen, wie z.B. Siliziumdioxid, nur schlecht mit Gummi oder Kunststoffen vermischen. Dies kann dazu führen, dass lange Mischzeiten oder die Zugabe weiterer, die Mischfähigkeit verbessernder Zusatzstoffe erforderlich sind, wodurch weitere Kosten entstehen.

Weiterhin kann die schlechte Mischfähigkeit der Zusatzstoffe mit Gummi bzw. Kunststoffen auch dazu führen, dass die Zusatzstoffe zu größeren Partikeln aggregieren. Dadurch können sich inhomogene Verteilungen der Zusatzstoffe im Gummi oder im Kunststoff und damit inhomogene Materialeigenschaften ergeben.

Verfahren zur Herstellung von feinem SiO2-Pulver sind aus der CN 1 712 352, aus der RU 2 349 546 C1 und der GB 1 211 703 bekannt.

Der vorliegenden Erfindung liegt die Aufgabe zu Grunde, ein Verfahren und eine Vorrichtung zur Verfügung zu stellen, mit dem die zuvor dargestellten Nachteile zumindest teilweise vermieden oder reduziert werden.

Diese Aufgabe wird erfindungsgemäß gelöst durch ein Verfahren zur Herstellung eines Zusatzstoffs gemäß Patentanspruch 1, bei dem ein geeigneter Precursor in ein Plasma eingebracht wird, bei dem der Precursor im Plasma reagiert, so dass sich der Zusatzstoff bildet, und bei dem der Zusatzstoff zur weiteren Verwendung gesammelt wird.

Dieses Verfahren hat unter anderem den Vorteil, dass Zusatzstoffe mit bestimmten Eigenschaften, wie zum Beispiel einer bestimmten Zusammensetzung und/oder Partikelgrößenverteilung, bedarfsmäßig hergestellt werden können.

Dadurch können die Zusatzstoffe in zeitlicher Nähe zu ihrer weiteren Verwendung, beispielsweise zu ihrer Zugabe zu einer Gummi- oder Kunststoffmischung, hergestellt werden. Dies hat den Vorteil, dass sich die Eigenschaften die Zusatzstoffe nicht durch eine Lagerung verändern. Die Zusatzstoffe befinden sich bei ihrer weiteren Verwendung vielmehr im nativen Zustand, d.h. sie besitzen ihre ursprünglichen Eigenschaften. Damit kann beispielsweise vermieden werden, dass Zusatzstoff-Partikel aggregieren. Auf diese Weise können insbesondere aufwändige Aufbereitungsverfahren zur Aufbereitung der Zusatzstoffe vermieden werden.

Zusatzstoffe können im nativen Zustand, d.h. unmittelbar nach ihrer Erzeugung im Plasma, noch weitere vorteilhafte Eigenschaften aufweisen, durch welche sich Vorteile für die nachfolgende Verwendung der Zusatzstoffe ergeben. So können

Zusatzstoff-Partikel durch das Plasma aktiviert sein, d.h. sich zum Beispiel in einem elektronisch angeregten oder sogar ionisierten Zustand befinden. Trifft ein solches aktiviertes Zusatzstoff-Partikel auf ein anderes Material wie beispielsweise Gummi oder Kunststoff können sich durch die im Partikel gespeicherte Aktivierungsenergie Bindungen zwischen den Partikel und dem anderen Material ausbilden. Dadurch kann beispielsweise die Mischfähigkeit des Zusatzstoffs mit dem anderen Material verbessert werden. Weiterhin können die Zusatzpartikel im nativen Zustand funktionale Gruppen an ihrer Oberfläche aufweisen, insbesondere funktionale Kohlenstoffgruppen, durch welche die Bindungs- und Mischfähigkeit mit anderen Materialien verbessert wird. Beispielsweise kann ein Siliziumoxid (SiOₓ)-Partikel eines Zusatzstoffes Methylgruppen an seiner Oberfläche aufweisen, durch welche eine Bindung an Gummi oder Kunststoff vermittelt wird.

Bei dem Zusatzstoff kann es sich insbesondere um einen Zusatzstoff für Gummi- oder Kunststoffprodukte handeln. Solche Zusatzstoffe werden bei der Herstellung dieser Produkte mit dem Gummi bzw. mit dem Kunststoff vermischt. Beispielsweise kann es sich bei dem Zusatzstoff um einen Zusatzstoff für Kraftfahrzeugreifen handeln, der zum Beispiel der Gummimischung zur Herstellung der Kraftfahrzeugreifen zugegeben wird.

Gemäß dem Verfahren wird ein geeigneter Precursor in ein Plasma eingebracht. Der Precursor kann in flüssiger, fester oder gasförmiger Form in das Plasma eingebracht werden. Der Begriff "Plasma" umfasst vorliegend insbesondere Niederdruckplasmen, atmosphärische Plasmen oder einen atmosphärischen Plasmastrahl, der auch als Plasmajet bezeichnet wird.

Die Wahl des Precursors hängt von dem zu erzeugenden Zusatzstoff ab. Für einen siliziumhaltigen Zusatzstoff wie Siliziumdioxid kann beispielsweise ein siliziumhaltiger Precursor wie Hexamethyldisiloxan (HMDSO) verwendet werden. Unter dem Begriff "geeigneter Precursor" wird demnach verstanden, dass ein Precursor verwendet wird, mit dem der zu erzeugende Zusatzstoff herstellbar ist.

Gemäß dem Verfahren reagiert der Precursor im Plasma, so dass sich der Zusatzstoff bildet. Der Precursor kann insbesondere durch das Plasma zu einer chemischen Reaktion angeregt werden, bei der sich der Zusatzstoff bildet. Zur Herbeiführung, Beschleunigung und/oder Regelung der Reaktion kann mit dem Precursor auch ein Katalysator in das Plasma eingebracht werden.

Gemäß dem Verfahren wird der Zusatzstoff zur weiteren Verwendung gesammelt. Unter dem Sammeln des Zusatzstoffs wird insbesondere jede Art von Einsammeln, Auffangen, Einfangen, Isolieren oder Extrahieren des Zusatzstoffs verstanden. Der Zusatzstoff kann beispielsweise zur Lagerung oder zur unmittelbaren Weiterverwendung in einem Gefäß aufgefangen werden. Der Zusatzstoff kann beispielsweise auch in einer Zuleitung aufgefangen werden, über die der Zusatzstoff direkt zur weiteren Verarbeitung, beispielsweise zur Vermischung mit einem Gummi oder Kunststoff, weitergeleitet wird. Der Zusatzstoff kann auch unmittelbar durch eine Gummi- oder Kunststoff-Verarbeitungsstation aufgefangen werden. Erfindungsgemäß wird der Zusatzstoff im Wesentlichen unmittelbar nach der Erzeugung einem Material zugegeben. Hierdurch wird erreicht, dass der Zusatzstoff dem Material in nativem Zustand zugegeben wird, so dass sich die oben beschriebenen Vorteile des nativen Zustands im Bezug auf das Material einstellen können.

Unter dem Material wird das Material verstanden, dem der Zusatzstoff zugegeben werden soll. Hierbei handelt es sich erfindungsgemäß um eine Gummi- oder Kunststoffmischung.

Unter der im Wesentlichen unmittelbaren Zugabe wird verstanden, dass zwischen der Erzeugung des Zusatzstoffs und der Zugabe des Zusatzstoffs zum Material weniger als 1 h, vorzugsweise weniger als 30 min., weiter bevorzugt weniger als 5 min., noch weiter bevorzugt weniger als 30 s, insbesondere weniger als 5 s liegen.

In einer Ausführungsform des Verfahrens ist der Zusatzstoff partikelförmig. Partikelförmige Zusatzstoffe finden eine breite Anwendung bei der Herstellung von Gummi- oder Kunststoffprodukten, insbesondere bei der Herstellung von Kraftfahrzeugreifen.

Die partikelförmigen Zusatzstoffe können beispielsweise eine durchschnittliche Partikelgröße im Bereich von 5 nm bis 10 µm, vorzugweise von 10 nm bis 1 µm, insbesondere von 10 nm bis 100 nm aufweisen. Unter der Partikelgröße wird der Durchmesser eines Partikels in seiner größten Ausdehnungsrichtung verstanden. Unter der durchschnittlichen Partikelgröße wird das arithmetische Mittel der Partikelgrößen verstanden.

Vorzugweise weisen die partikelförmigen Zusatzstoffe eine solche Partikelgrößenverteilung auf, dass 90 % der Partikel eine Größe von weniger als 10 *µ*m, vorzugsweise von weniger als 1 *µ*m, weiter vorzugsweise von weniger als 100 nm, insbesondere von weniger als 50 nm aufweisen.

Es wurde festgestellt, dass mit dem Verfahren die Größenverteilung bzw. die durchschnittliche Partikelgröße der hergestellten Zusatzstoffe zumindest bereichsweise bedarfsmäßig einstellbar ist.

In einer Ausführungsform des Verfahrens wird der Precursor in ein atmosphärisches Plasma, vorzugweise in einen atmosphärischen Plasmastrahl gegeben. Ein atmosphärisches Plasma bzw. ein atmosphärischer Plasmastrahl hat den Vorteil, dass die Zusatzstoffe bei Atmosphärendruck hergestellt werden können, so dass keine aufwändige Niederdruckumgebung erforderlich ist.

In einer Ausführungsform des Verfahrens wird der Precursor in einen atmosphärischen Plasmastrahl gegeben, wobei der atmosphärische Plasmastrahl durch elektrische Entladung in einem Arbeitsgas erzeugt wird. Ein atmosphärischer Plasmastrahl hat sich für die Herstellung der Zusatzstoffe als besonders geeignet erwiesen. Weiterhin hat die Verwendung eines atmosphärischen Plasmastrahls den Vorteil, dass eine ggf. aufwändige Plasmakammer zur Erzeugung des Plasmas und zur Reaktion des Precursors entfallen kann. So ist es beispielsweise möglich, dass der atmosphärische Plasmastrahl mit einer Plasmadüse erzeugt wird, die bedarfsgemäß und flexibel angeordnet werden kann.

In einer Ausführungsform des Verfahrens wird der atmosphärische Plasmastrahl durch eine mit einer hochfrequenten Hochspannung erzeugten Bogenentladung in einem Arbeitsgas erzeugt.

Unter einer hochfrequenten Hochspannung wird typischerweise eine Spannung von 1 bis 100 kV, insbesondere 1 bis 50 kV, bevorzugt 10 bis 50 kV, bei einer Frequenz von 1 bis 100 kHz, insbesondere 10 bis 100 kHz, bevorzugt 10 bis 50 kHz verstanden.

Auf diese Weise wird ein Plasmastrahl erzeugt, der einerseits eine hohe Reaktivität und andererseits eine verhältnismäßig geringe Temperatur aufweist. Durch die hohe Reaktivität kann eine effektive Anregung des Precursors und so eine effektive Herstellung des Zusatzstoffes erreicht werden. Weiterhin können die Zusatzstoffe durch den Plasmastrahl an ihrer Oberfläche aktiviert werden, so dass sie eine bessere Mischfähigkeit mit Gummi oder Kunststoffen aufweisen. Durch die geringe Temperatur des Plasmastrahl können Beschädigungen an Vorrichtungen, Edukten oder Produkten verhindert werden. Beispielsweise kann der Plasmastrahl in unmittelbarer Nähe des Stoffs positioniert werden, mit dem der Zusatzstoff vermischt werden soll, ohne dass es zu einer Beschädigung des Stoffs kommt. Auf diese Weise kann der Zusatzstoff beispielsweise unmittelbar aus dem Plasmastrahl in den Stoff befördert werden. Beispielsweise kann der Plasmastrahl in der Nähe von Gummi oder Kunststoff, dem der Zusatzstoff zugegeben werden soll, positioniert werden, ohne dass es zu einem Verbrennen oder Verschmoren des Gummis oder Kunststoffs kommt.

In einer Ausführungsform des Verfahrens wird als Precursor ein Silizium-haltiger Precursor verwendet. Die Verwendung solcher Precursoren erlaubt die Herstellung siliziumhaltiger Zusatzstoffe, die beispielsweise bei der Herstellung von Gummi- oder Kunststoffprodukten eine große Rolle spielen. Beispiele für solche Zusatzstoffe sind unter anderem Siliziumoxide oder Kieselsäuren, insbesondere amorphe Kieselsäuren, die zusätzlich funktionale und/oder kohlenstoffhaltige Gruppen aufweisen können.

In einer Ausführungsform des Verfahrens wird als Precursor ein flüssiger Precursor, insbesondere Tetraethylorthosilicat (TEOS) oder Hexamethyldisiloxan (HMDSO) verwendet. Mit diesen Precursoren können siliziumhaltige Zusatzstoffe effizient hergestellt werden.

In einer Ausführungsform des Verfahrens wird als Precursor ein gasförmiger Precursor, insbesondere Silan verwendet. Weiterhin können auch gleichzeitig ein gasförmiger und ein fester oder flüssiger Precursor verwendet werden. Der gasförmige Precursor kann beispielsweise als Träger für den festen oder flüssigen Precursor verwendet werden oder/und als Arbeitsgas bei der Plasmaerzeugung, beispielsweise als Arbeitsgas einer Plasmadüse zur Erzeugung eines Plasmastrahls.

Die zuvor beschriebene Aufgabe wird weiterhin gelöst durch die Verwendung einer Plasmadüse zur Erzeugung eines atmosphärischen Plasmastrahls zur Herstellung von Zusatzstoffen, insbesondere für Gummi- und Kunststoffprodukte, vorzugweise für Gummi- oder Kunststoffmischungen für Kraftfahrzeugreifen. Es wurde festgestellt, dass die Verwendung einer Plasmadüse eine effiziente, kostengünstige und/oder bedarfsgerechte Produktion der Zusatzstoffe erlaubt. Die Plasmadüse kann insbesondere zur Erzeugung eines atmosphärischen Plasmastrahls durch elektrische Entladung in einem Arbeitsgas eingerichtet ist. Beispielsweise kann die Plasmadüse zur Erzeugung eines atmosphärischen Plasmastrahls durch eine mit einer hochfrequenten Hochspannung erzeugte Bogenentladung in einem Arbeitsgas eingerichtet sein.

Die zuvor beschriebene Aufgabe wird erfindungsgemäß weiterhin gelöst durch eine Vorrichtung zur Verarbeitung von Gummi oder Kunststoffen mit einer Verarbeitungsstation zur Verarbeitung von Gummi oder Kunststoffen, mit einer Plasmadüse zur Erzeugung eines atmosphärischen Plasmastrahls und mit einer Precursorzuführung, die so angeordnet ist, dass ein Precursor in den von der Plasmadüse erzeugten Plasmastrahl einleitbar ist, wobei die Vorrichtung so eingerichtet ist, dass im Betrieb ein aus der Plasmadüse bzw. aus dem von der Plasmadüse erzeugten Plasmastrahl austretender Zusatzstoff zu der Verarbeitungsstation geführt wird. Diese Vorrichtung erlaubt unter anderem eine kostengünstige und bedarfsgemäße Herstellung von Zusatzstoffen, die unmittelbar mit Gummi bzw. Kunststoff verarbeitbar sind.

Bevorzugt kann mit der Vorrichtung eines der zuvor beschriebenen Verfahren durchgeführt werden. Weiterhin wird diese Vorrichtung bevorzugt zur Durchführung eines der zuvor beschriebenen Verfahren verwendet.

Die Vorrichtung weist eine Verarbeitungsstation zur Verarbeitung von Gummi oder Kunststoffen auf. Hierbei kann es sich insbesondere um eine Verarbeitungsstation handeln, mit der Gummi oder Kunststoffe durchmengt werden können.

Bei der Vorrichtung ist die Precursorzuführung so angeordnet, dass ein Precursor in den von der Plasmadüse erzeugten Plasmastrahl einleitbar ist. Die Precursorzuführung kann beispielsweise eine Precursorzuleitung aufweisen, durch die ein Precursor in die Plasmadüse hinein geleitet wird, so dass er im Inneren der Plasmadüse in den Plasmastrahl gelangt. Die Precursorzuführung kann beispielsweise auch eine Precursorzuleitung aufweisen, durch die ein Precursor in den Plasmastrahl geleitet wird, nachdem dieser aus der Plasmadüse ausgetreten ist.

Die Vorrichtung ist so eingerichtet, dass im Betrieb ein aus der Plasmadüse bzw. aus dem von der Plasmadüse erzeugten Plasmastrahl austretender Zusatzstoff zu der Verarbeitungsstation geführt wird. Zu diesem Zweck kann die Vorrichtung beispielsweise ein angetriebenes oder ein passives Transportmittel aufweisen, beispielsweise ein Förderband, eine Pumpe oder auch eine abwärtsgerichtete Zuleitung wie ein Rohr. Die Plasmadüse kann auch so zu der Verarbeitungsstation angeordnet werden, dass die Zusatzstoffe unmittelbar, beispielsweise allein durch die Schwerkraft oder durch den Gasstrom des Plasmastrahls, zu der Verarbeitungsstation gelangen.

Vorzugsweise gelangt der Zusatzstoff in den Bereich der Verarbeitungsstation, in dem Gummi bzw. Kunststoff verarbeitet wird, beispielsweise in ein Reservoir oder einen Rühr- oder Extrusionsbereich der Verarbeitungsstation.

In einer Ausführungsform der Vorrichtung weist die Verarbeitungsstation eine Rührvorrichtung zur Herstellung von Gummi- und/oder Kunststoffmischungen aufweist. Dies hat unter anderem den Vorteil, dass der Zusatzstoff in der Verarbeitungsstation mit dem Gummi oder Kunststoff vermischt werden kann. Beispielsweise kann die Vorrichtung so eingerichtet sein, dass der Zusatzstoff in das Rührbehältnis der Rührvorrichtung gelangt.

In einer Ausführungsform der Vorrichtung weist die Verarbeitungsstation einen Extruder zur Extrusion von Gummi- und/oder Kunststoffmischungen auf. Auf diese Weise kann der Zusatzstoff unmittelbar vor der Extrusion in das Gummi oder den Kunststoff eingebracht werden. Vorzugsweise weist der Extruder eine Vermengungseinrichtung auf, so dass der Zusatzstoff vor der Extrusion mit dem Gummi bzw. dem Kunststoff gut vermengt wird.

In einer Ausführungsform der Vorrichtung ist die Plasmadüse zur Erzeugung eines atmosphärischen Plasmastrahls durch elektrische Entladung in einem Arbeitsgas eingerichtet ist. In einer weiteren Ausführungsform der Vorrichtung ist die Plasmadüse zur Erzeugung eines atmosphärischen Plasmastrahls durch eine mit einer hochfrequenten Hochspannung erzeugten Bogenentladung in einem Arbeitsgas eingerichtet. Hinsichtlich der Vorteile dieser Ausführungsformen wird auf die vorherige Beschreibung dieser Merkmale zum Verfahren verwiesen. Weitere Merkmale und Ausführungsbeispiele der Erfindung ergeben sich aus der nachfolgenden Beschreibung von Ausführungsbeispielen, wobei auf die beigefügte Zeichnung Bezug genommen wird.

In der Zeichnung zeigen
- Fig. 1: ein Ausführungsbeispiel des erfindungsgemäßen Verfahrens,
- Fig. 2: ein Ausführungsbeispiel der erfindungsgemäßen Vorrichtung sowie des erfindungsgemäßen Verfahrens und
- Fig. 3: ein weiteres Ausführungsbeispiel der erfindungsgemäßen Vorrichtung sowie des erfindungsgemäßen Verfahrens.

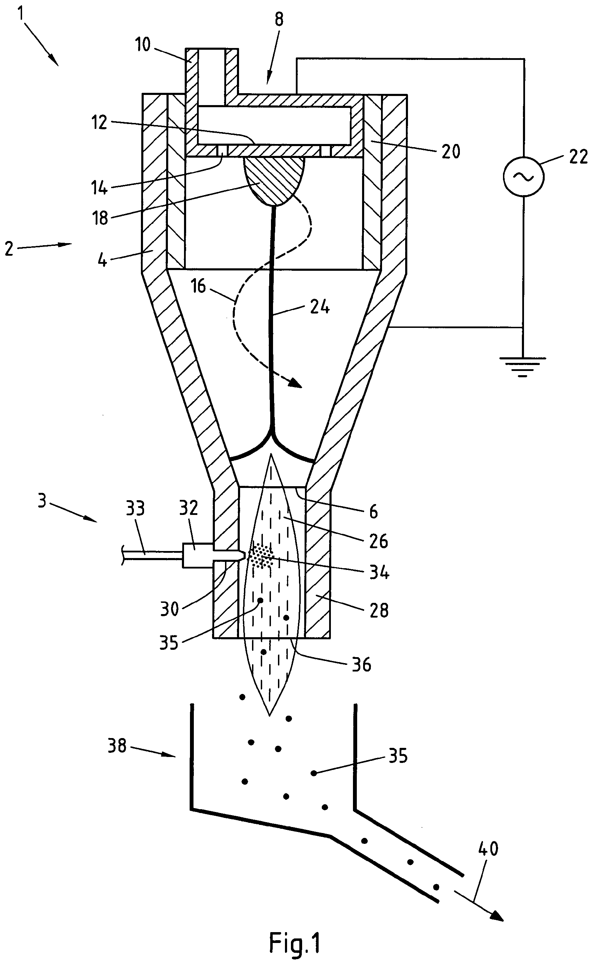

Fig. 1 zeigt eine Vorrichtung 1 zur Herstellung von Zusatzstoffen. Die Vorrichtung umfasst eine Plasmadüse 2 zur Erzeugung eines atmosphärischen Plasmastrahls sowie eine Precursorzuführung 3.

Die Plasmadüse 2 weist ein Düsenrohr 4 aus Metall auf, das sich konisch zu einer Düsenöffnung 6 verjüngt. Am der Düsenöffnung 6 entgegengesetzten Ende weist das Düsenrohr 4 eine Dralleinrichtung 8 mit einem Einlass 10 für ein Arbeitsgas auf, beispielsweise für Stickstoff.

Eine Zwischenwand 12 der Dralleinrichtung 8 weist einen Kranz von schräg in Umfangsrichtung angestellten Bohrungen 14 auf, durch die das Arbeitsgas verdrallt wird. Der stromabwärtige, konisch verjüngte Teil des Düsenrohres wird deshalb von dem Arbeitsgas in der Form eines Wirbels 16 durchströmt, dessen Kern auf der Längsachse des Düsenrohres verläuft. An der Unterseite der Zwischenwand 12 ist mittig eine Elektrode 18 angeordnet, die koaxial in Richtung des verjüngten Abschnittes in das Düsenrohr hineinragt. Die Elektrode 18 ist elektrisch mit der Zwischenwand 12 und den übrigen Teilen der Dralleinrichtung 8 verbunden. Die Dralleinrichtung 8 ist durch ein Keramikrohr 20 elektrisch gegen das Düsenrohr 4 isoliert. Über die Dralleinrichtung 8 wird an die Elektrode 18 eine hochfrequente Hochspannung angelegt, die von einem Transformator 22 erzeugt wird. Der Einlass 10 ist über einen nicht gezeigten Schlauch mit einer unter Druck stehenden Arbeitsgasquelle mit variablem Durchsatz verbunden. Das Düsenrohr 4 ist geerdet. Durch die 30 angelegte Spannung wird eine Hochfrequenzentladung in der Form eines Lichtbogens 24 zwischen der Elektrode 18 und dem Düsenrohr 4 erzeugt.

Der Begriff "Lichtbogen" wird hier als phänomenologische Beschreibung der Entladung verwendet, da die Entladung in Form eines Lichtbogens auftritt. Der Begriff "Lichtbogen" wird aber bei Gleichspannungsentladung mit im Wesentlichen konstanten Spannungswerten verstanden.

Aufgrund der drallförmigen Strömung des Arbeitsgases wird dieser Lichtbogen jedoch im Wirbelkern auf der Achse des Düsenrohres 4 kanalisiert, so dass er sich erst im Bereich der Düsenöffnung 6 zur Wand des Düsenrohres 4 verzweigt. Das Arbeitsgas, das im Bereich des Wirbelkerns und damit in unmittelbarer Nähe des Lichtbogens 24 mit hoher Strömungsgeschwindigkeit rotiert, kommt mit dem Lichtbogen in innige Berührung und wird dadurch zum Teil in den

Plasmazustand überführt, so dass ein atmosphärischer Plasmastrahl durch die Düsenöffnung 6 aus der Plasmadüse 2 in eine im Bereich der Düsenöffnung angeordnete Mischvorrichtung eintritt.

Die Mischvorrichtung weist ein Mischrohr 28 auf, dessen Wand an einer Stelle eine Öffnung 30 aufweist, in der das Ende 32 der Precursorzuführung 3 eingelassen ist. Die Precursorzuführung weist eine Zuleitung 33 auf, durch die ein für die Herstellung eines gewünschten Zusatzstoffs 35 geeigneter Precursor 34 in den Plasmastrahl 26 eingebracht werden kann.

Durch die Anregung im Plasmastrahl 26 reagiert der Precursor 34, so dass sich partikelförmige Zusatzstoffe 35 bilden, die mit dem Plasmastrahl aus der Auslassöffnung 36 transportiert werden und mit der unter der Auslassöffnung 36 angeordneten Sammelvorrichtung 38 eingesammelt und zur zur unmittelbaren Weiterverarbeitung abgeführt werden (s. Pfeil 40).

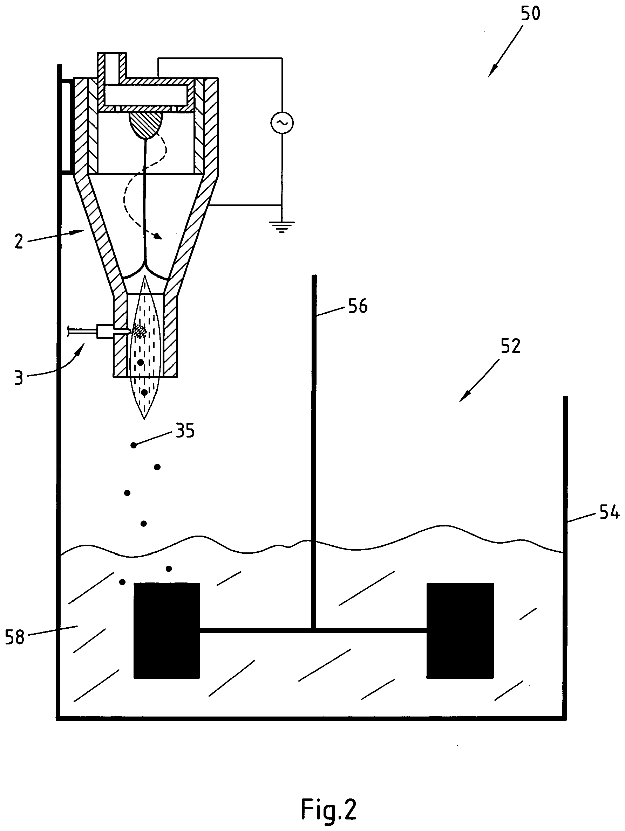

Fig. 2 zeigt ein Ausführungsbeispiel der erfindungsgemäßen Vorrichtung sowie des erfindungsgemäßen Verfahrens. In Fig. 2 ist eine Vorrichtung 50 zur Verarbeitung von Gummi oder Kunststoffen dargestellt. Die Vorrichtung 50 umfasst eine Verarbeitungsstation 52 zur Verarbeitung von Gummi oder Kunststoffen, die als Rührvorrichtung mit einem Rührgefäß 54 und einem Rührer 56 ausgebildet ist. Weiterhin umfasst die Vorrichtung 50 eine oberhalb des Rührgefäßes angebrachte Plasmadüse 2 sowie eine Precursorzuführung 3. Die Plasmadüse 2 und die Precursorzuführung sind wie in Fig. 1 beschrieben ausgebildet. Die Plasmadüse ist so angeordnet, dass aus der Plasmadüse austretende Zusatzstoffe 35 durch den Plasmastrahl durch unmittelbar in das Rührgefäß 54 geführt werden. Eine im Rührgefäß 54 befindliche Gummimasse 58 kann auf diese Weise unmittelbar mit dem Zusatzstoff 35 vermengt werden.

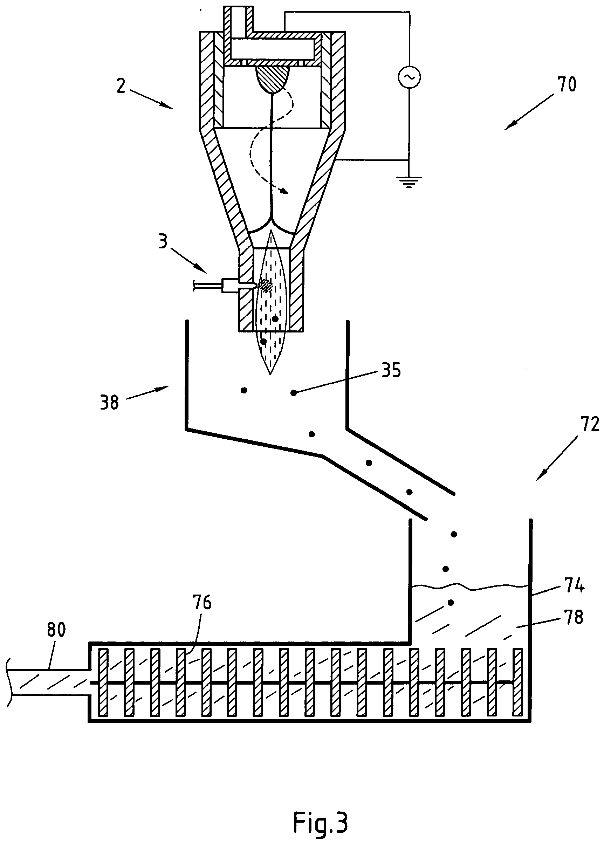

Fig. 3 zeigt ein weiteres Ausführungsbeispiel der erfindungsgemäßen Vorrichtung sowie des erfindungsgemäßen Verfahrens. In Fig. 3 ist eine Vorrichtung 70 zur Verarbeitung von Gummi oder Kunststoffen dargestellt. Die Vorrichtung 70 umfasst eine Verarbeitungsstation 72 zur Verarbeitung von Gummi oder Kunststoffen, die als Extruder mit einem Extruder-Behältnis 74 und einer Extruderschraube 76 ausgebildet ist. Weiterhin umfasst die Vorrichtung 70 eine oberhalb des Rührgefäßes angebrachte Plasmadüse 2 sowie eine Precursorzuführung 3. Die Plasmadüse 2 und die Precursorzuführung 3 sind wie in Fig. 1 beschrieben ausgebildet. Unterhalb der Plasmavorrichtung ist eine Sammelvorrichtung 38 angeordnet, mit der die aus der Plasmadüse 2 austretenden Zusatzstoffe 35 eingesammelt und über den durch den Plasmastrahl entstehenden Gasstrom in das Extruder-Behältnis geführt werden. Eine im Extruder 74 befindliche Kunststoffmasse 78 kann auf diese Weise unmittelbar mit dem Zusatzstoff 35 vermengt werden, so dass das mit dem Extruder hergestellte Extrudat 80 die durch den Zusatzstoff 35 vermittelten Eigenschaften aufweist.

## Patentansprüche

1. Verfahren zur Herstellung eines Zusatzstoffs für Gummi- oder Kunststoffprodukte, vorzugweise für Kraftfahrzeugreifen,
- bei dem ein geeigneter Precursor in ein Plasma eingebracht wird,
- bei dem der Precursor im Plasma reagiert, so dass sich der Zusatzstoff bildet,
- bei dem der Zusatzstoff zur weiteren Verwendung gesammelt wird und
- bei dem der Zusatzstoff im Wesentlichen unmittelbar nach der Erzeugung einer Gummi- oder Kunststoffmischung zugegeben wird.

2. Verfahren nach Anspruch 1,
**dadurch gekennzeichnet,**
**dass** der Zusatzstoff partikelförmig ist.

3. Verfahren nach einem Anspruch 1 oder 2,
**dadurch gekennzeichnet,**
**dass** der Precursor in ein atmosphärisches Plasma, vorzugweise in einen atmosphärischen Plasmastrahl gegeben wird.

4. Verfahren nach einem der Ansprüche 1 bis 3,
**dadurch gekennzeichnet,**
**dass** der Precursor in einen atmosphärischen Plasmastrahl gegeben wird, wobei der atmosphärische Plasmastrahl durch elektrische Entladung in einem Arbeitsgas erzeugt wird.

5. Verfahren nach einem der Ansprüche 1 bis 4,
**dadurch gekennzeichnet,**
**dass** der atmosphärische Plasmastrahl durch eine mit einer hochfrequenten Hochspannung erzeugten Bogenentladung in einem Arbeitsgas erzeugt wird.

6. Verfahren nach einem der Ansprüche 1 bis 5,
**dadurch gekennzeichnet,**
**dass** als Precursor ein Silizium-haltiger Precursor verwendet wird.

7. Verfahren nach einem der Ansprüche 1 bis 6,
**dadurch gekennzeichnet,**
**dass** als Precursor ein flüssiger Precursor, insbesondere Tetraethylorthosilicat (TEOS) oder Hexamethyldisiloxan (HMDSO) verwendet wird.

8. Verfahren nach einem der Ansprüche 1 bis 7,
**dadurch gekennzeichnet,**
**dass** als Precursor ein gasförmiger Precursor, insbesondere Silan verwendet wird.

9. Vorrichtung zur Verarbeitung von Gummi oder Kunststoffen
- mit einer Verarbeitungsstation zur Verarbeitung von Gummi oder Kunststoffen,
- mit einer Plasmadüse zur Erzeugung eines atmosphärischen Plasmastrahls und
- mit einer Precursorzuführung, die so angeordnet ist, dass ein Precursor in den von der Plasmadüse erzeugten Plasmastrahl einleitbar ist,
- wobei die Vorrichtung so eingerichtet ist, dass im Betrieb ein aus der Plasmadüse bzw. aus dem von der Plasmadüse erzeugten Plasmastrahl austretender Zusatzstoff zu der Verarbeitungsstation geführt wird.

10. Vorrichtung nach Anspruch 9,
**dadurch gekennzeichnet,**
**dass** die Verarbeitungsstation eine Rührvorrichtung zur Herstellung von Gummi- und/oder Kunststoffmischungen aufweist.

11. Vorrichtung nach Anspruch 9 oder 10,
**dadurch gekennzeichnet,**
**dass** die Verarbeitungsstation einen Extruder zur Extrusion von Gummi- und/oder Kunststoffmischungen aufweist.

12. Vorrichtung nach einem der Ansprüche 9 bis 11,
**dadurch gekennzeichnet,**
**dass** die Plasmadüse zur Erzeugung eines atmosphärischen Plasmastrahls durch elektrische Entladung in einem Arbeitsgas eingerichtet ist.

13. Vorrichtung nach einem der Ansprüche 9 bis 12,
**dadurch gekennzeichnet,**
**dass** die Plasmadüse zur Erzeugung eines atmosphärischen Plasmastrahls durch eine mit einer hochfrequenten Hochspannung erzeugten Bogenentladung in einem Arbeitsgas eingerichtet ist.

## Claims

1. Method for producing an additive for rubber or plastics products, preferably for vehicle tyres,
- in which a suitable precursor is added to a plasma,
- in which the precursor reacts in the plasma so as to form the additive,
- in which the additive is collected for further use, and
- in which the additive is added to a rubber or plastics mixture substantially directly after the formation.

2. Method according to claim 1, **characterised in that** the additive is in particulate form.

3. Method according to claim 1 or 2, **characterised in that** the precursor is added to an atmospheric plasma, preferably to an atmospheric plasma jet.

4. Method according to one of claims 1 to 3, **characterised in that** the precursor is added to an atmospheric plasma jet, wherein the atmospheric plasma jet is generated by electrical discharge in a working gas.

5. Method according to one of claims 1 to 4, **characterised in that** the atmospheric plasma jet is generated by an arc discharge generated with a high-frequency high voltage in a working gas.

6. Method according to one of claims 1 to 5, **characterised in that** a silicon-containing precursor is used as the precursor.

7. Method according to one of claims 1 to 6, **characterised in that** a liquid precursor, in particular tetraethyl orthosilicate (TEOS) or hexamethyl disiloxane (HMDSO) is used as the precursor.

8. Method according to one of claims 1 to 7, **characterised in that** a gaseous precursor, in particular silane, is used as the precursor.

9. Device for processing rubber or plastics
- with a processing station for processing rubber or plastics,
- with a plasma nozzle for generating an atmospheric plasma jet, and
- with a precursor feed line, which is arranged so that a precursor can be introduced into the plasma jet generated by the plasma nozzle,
- wherein the device is configured such that during operation an additive exiting from the plasma nozzle or from the plasma jet produced by the plasma nozzle is supplied to the processing station.

10. Device according to claim 9, **characterised in that** the processing station comprises a stirring device for producing rubber and/or plastics mixtures.

11. Device according to claim 9 or 10, **characterised in that** the processing station comprises an extruder for extruding rubber and/or plastics mixtures.

12. Device according to one of claims 9 to 11, **characterised in that** the plasma nozzle is configured to generate an atmospheric plasma jet by electrical discharge in a working gas.

13. Device according to one of claims 9 to 12, **characterised in that** the plasma jet is configured to generate an atmospheric plasma jet by an arc discharge generated with a high-frequency high voltage in a working gas.

## Revendications

1. Procédé d'obtention d'un additif pour des produits à base de caoutchouc ou de matières synthétiques, de préférence pour des pneus de véhicules automobiles,
- dans lequel un précurseur adéquat est introduit dans un plasma,
- dans lequel le précurseur réagit dans le plasma, de façon à ce que se forme l'additif,
- dans lequel on collecte l'additif en vue d'autres utilisations et
- dans lequel l'additif est ajouté à un mélange de caoutchouc ou de matières synthétiques de façon sensiblement immédiate après sa production.

2. Procédé selon la revendication 1, **caractérisé en ce que** l'additif est de forme particulaire.

3. Procédé selon la revendication 1 ou 2, **caractérisé en ce que** le précurseur est introduit dans un plasma atmosphérique et, de préférence, dans un jet de plasma atmosphérique.

4. Procédé selon l'une quelconque des revendications 1 à 3, **caractérisé en ce que** le précurseur est introduit dans un jet de plasma atmosphérique, étant entendu que le jet de plasma atmosphérique est produit par une décharge électrique dans un gaz de travail.

5. Procédé selon l'une quelconque des revendications 1 à 4, **caractérisé en ce que** le jet de plasma atmosphérique est produit par la décharge d'un arc électrique, produite elle-même par une haute tension à hyperfréquences, dans un gaz de travail.

6. Procédé selon l'une quelconque des revendications 1 à 5, **caractérisé en ce que** le précurseur utilisé est un précurseur silicifère.

7. Procédé selon l'une quelconque des revendications 1 à 6, **caractérisé en ce que** le précurseur utilisé est un précurseur liquide, en particulier le tétraéthylorthosilicate (TEOS) ou l'hexaméthyldisiloxane (HMDSO).

8. Procédé selon l'une quelconque des revendications 1 à 7, **caractérisé en ce que** le précurseur utilisé est un précurseur en phase gazeuse, en particulier de silane.

9. Dispositif de traitement de caoutchouc ou de matières synthétiques
- avec une station de traitement pour le traitement de caoutchouc ou de matières synthétiques,
- avec une tuyère de plasma afin de créer un jet de plasma atmosphérique, et
- avec une amenée de précurseur, agencée de manière telle qu'il est possible d'introduire un précurseur dans le jet de plasma produit par la tuyère de plasma,
- où l'agencement du dispositif est tel que lors de son fonctionnement, un additif éjecté de la tuyère de plasma et/ou du jet de plasma produit par la tuyère de plasma, est conduit à la station de traitement.

10. Dispositif selon la revendication 9, **caractérisé en ce que** la station de traitement comporte un dispositif de mélange pour la préparation de mélanges de caoutchouc et/ou de matières synthétiques.

11. Dispositif selon la revendication 9 ou 10, **caractérisé en ce que** la station de traitement comporte une extrudeuse pour l'extrusion de mélanges de caoutchouc et/ou de matières synthétiques.

12. Dispositif selon l'une quelconque des revendications 9 à 11, **caractérisé en ce que** la tuyère de plasma est configurée pour la production d'un jet de plasma atmosphérique par une décharge électrique dans un gaz de travail.

13. Dispositif selon l'une quelconque des revendications 9 à 12, **caractérisé en ce que** la tuyère de plasma est configurée pour la production d'un jet de plasma atmosphérique par une décharge d'arc électrique créé à l'aide d'une haute tension à hyperfréquences dans un gaz de travail.
